(19) Europäisches Patentamt
European Patent Office
Office européen des brevets

(11) **EP 4 596 186 A1**

(12) **EUROPEAN PATENT APPLICATION**
published in accordance with Art. 153(4) EPC

(43) Date of publication:
**06.08.2025 Bulletin 2025/32**

(51) International Patent Classification (IPC):
**B25J 17/00** (2006.01)   **F16H 1/32** (2006.01)
**H02K 7/116** (2006.01)

(21) Application number: **23871597.3**

(22) Date of filing: **24.08.2023**

(52) Cooperative Patent Classification (CPC):
**B25J 17/00; F16H 1/32; H02K 7/116**

(86) International application number:
**PCT/JP2023/030437**

(87) International publication number:
**WO 2024/070356 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.09.2022 PCT/JP2022/036642**

(71) Applicant: **Rorze Corporation
Fukuyama-shi, Hiroshima 720-2104 (JP)**

(72) Inventor: **SAKIYA, Fumio
Fukuyama-shi, Hiroshima 720-2104 (JP)**

(74) Representative: **Kramer Barske Schmidtchen
Patentanwälte PartG mbB
European Patent Attorneys
Landsberger Strasse 300
80687 München (DE)**

(54) **WORKPIECE-CONVEYING ROBOT**

(57)     Provided is a workpiece transfer robot comprising a joint equipped with a highly precise actuator that has a small size in the vertical direction. The present invention is a workpiece transfer robot comprising a joint equipped with an actuator 1 configured from a speed reducer section and a motor section, wherein the speed reducer section is arranged parallel to a circular fixed gear 5 and a circular output gear 4, and an oscillating gear 6 is arranged inclined with respect to the fixed gear 5 and the output gear 4 between the fixed gear 5 and the output gear 4. The fixed gear 5 and the oscillating gear 6 are configured so as to mesh at a first position, and the oscillating gear 6 and the output gear 4 are configured so as to mesh at a second position. In addition, the motor section drives the oscillating gear 6 and is arranged coaxially with a permanent magnet 7 on the outside of the oscillating gear 6, and the size of the joint of the workpiece transfer robot in the vertical direction is minimized by arranging an electromagnet 28 coaxially on the outside of the permanent magnet.

FIG. 6

EP 4 596 186 A1

## Description

### TECHNICAL FIELD

The present invention relates to a workpiece transfer robot having an actuator articulated with a motor section and a speed reducer section.

### BACKGROUND ART

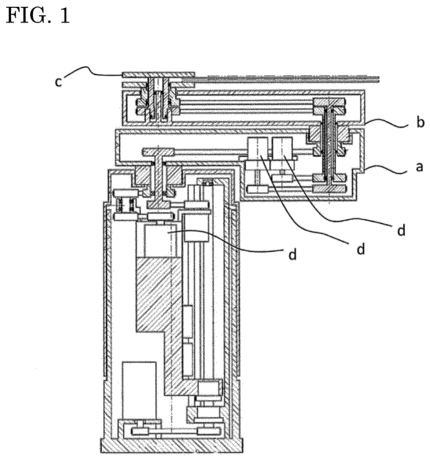

The transfer apparatus for transporting substrates such as semiconductor wafers is mainly equipped with a clean transfer robot equipped with a horizontally articulated arm, and is used to transport a substrate between a container containing the substrate and a processing apparatus. FIG. 1 is a cross-sectional view showing the structure of a conventional clean transfer robot. The horizontally articulated arm included in this transfer robot has upper and lower two-stage arms a, b and fingers c connected to each other rotatable, and each arm a, b and finger c are driven by an individual actuator d. As such a clean transfer robot, the technology shown in Patent Document 1 is known.

Electric motors, which are easy to control, are often used in the motor sections of robot joint actuators. The electric motors need to have small diameters so they can be installed in the limited space of robot joints. However, as the diameter gets smaller, the torque becomes lower. To solve this problem, a reduction gear section is attached to increase the torque with a large reduction ratio.

A differential gear reduction mechanism is known as a speed reducer having a large reduction ratio per number of gear teeth. For example, Patent Document 2 discloses an actuator (invention title: "motor") that includes a differential gear mechanism as a speed reducer section. This speed reducer is a speed reducer that utilizes precession and nutation motion among speed reducers of a differential gear mechanism. The cross-sectional view (FIG. 1) disclosed in Patent Document 2 is reproduced in FIG.2. This speed reducer provides an oscillating gear h having tooth surfaces on both sides between an output gear f rotating together with an output shaft e and a fixed gear g fixed to the main body, and each tooth of the oscillating gear h on both sides meshes with the output gear f and the fixed gear g, thereby a rotor is configured so that the oscillating gear h is always inclined at a certain angle with respect to the output shaft e. The oscillating gear h is made of magnetic material, and on the side of the fixed gear g where the oscillating gear h is faced to, six coils k are arranged at equal intervals as a drive source to rock the oscillating gear.

When electricity is applied to one of the six coils k, the oscillating gear h is attracted by the magnetic field generated by that coil k, and then electricity is applied to the adjacent coil k in turn, causing the oscillating gear h to rotate in the inclined direction as it is attracted to the current-applied coil k. Accordingly, the meshing position of the teeth of the fixed gear g and the oscillating gear h is also displaced in the direction of rotation. A predetermined difference in the number of teeth between the fixed gear g and the oscillating gear h is provided, which causes a rotational displacement between the fixed gear g and the oscillating gear h. Similarly, a predetermined difference is set between the number of teeth on the oscillating gear h and the number of teeth on the output gear f, which also causes displacement between the oscillating gear h and the output gear f. This results in a large reduction ratio.

Patent Document 3 discloses an actuator in which an electric motor is provided with a precession type speed reducer. This actuator provides a cam part on the outer rotor of the electric motor, and causes the oscillating gear (first face gear) to precession. The oscillating gear meshes with a fixed gear (second face gear). The oscillating gear is connected to the inner ring (equivalent to the function of the output gear) through the spline structure so as not to be rotatable each other. Due to the difference in the number of teeth between the oscillating gear and the fixed gear, the oscillating gear rotates, and the inner ring rotates in conjunction with this. The inner ring is connected to the output shaft. According to this technology, the precession speed reducer can be placed outside the radial direction of the outer rotor of the motor, so that the actuator can be axially flattened.

### RELATED ART DOCUMENTS

### PATENT DOCUMENTS

Patent Document 1: Japanese Unexamined Patent Application Publication No. 2012-161858
Patent Document 2: Japanese Examined Patent Publication No. 06-005981
Patent Document 3: Japanese Unexamined Patent Application Publication No. 2020-43620

### DISCLOSURE OF THE INVENTION

### PROBLEMS TO BE SOLVED BY THE INVENTION

However, the motor equipped with the oscillating gear mechanism of Patent Document 2 has a form in which the oscillating gear is attracted by magnetic force by energizing a coil located below the oscillating gear, which results in a large vertical dimension. Furthermore, as the magnetic force of the coil magnet located on the side where the fixed gear is positioned is the only force that drives the oscillating gear, the magnetic force attracting the oscillating gear was not strong enough, which could, for example, cause the gear teeth to jump when a large load is applied.

Further, in the motor providing the oscillating gear mechanism of Patent Document 3, the precession type speed reducer is disposed radially outside the outer rotor of the motor, so that the position of the magnetic pole of the electromagnet is close to the center, making it difficult to generate torque. In addition, as an actuator in the joint of the robot, it is difficult to lay the electrical wiring and piping necessary for joint operation through the internal space of the output shaft.

MEANS OF SOLVING THE PROBLEMS

In order to solve the above problem, one aspect of the workpiece transfer robot of the present invention is;

a workpiece transfer robot having a joint in which a first arm and a second arm, or the second arm and a finger, and a lifting mechanism for lifting and moving the first arm are rotatable about a central axis line, the workpiece transfer robot further comprising;
an output shaft fixed to a base end of the finger side and having a vertical direction being a direction of the central axis line;
an output gear rotating about the central axis line together with the output shaft;
a fixed gear disposed in an internal space of a front end of the second arm side and provided with a tooth surface facing a tooth surface of the output gear;
a substantially cylindrical rotor rotatably attached to the output shaft independently around the central axis line;
a bearing provided on an inner wall of the rotor, with an inclined central axis line inclined at a predetermined angle with respect to a central axis line as a center of rotation;
an oscillating gear supported by the bearing, positioned between the tooth surfaces of the output gear and the fixed gear, having a first tooth surface provided on a surface on the fixed gear side meshed with the fixed gear and a second tooth surface provided on a surface on the output gear side meshed with the output gear, and rotating around the inclined central axis line;
a permanent magnet fixed coaxially around the central axis line of an outer circumference of the rotor as a center; and
an electromagnet provided in an internal space of a front end of the second arm side and generating a rotating magnetic field with respect to the permanent magnet.

In order to solve the above problem, another aspect of the workpiece transfer robot of the present invention is;

a workpiece transfer robot having a joint in which a first arm and a second arm, or the second arm and a finger, and a lifting mechanism for lifting and moving the first arm are rotatable about a central axis line, the workpiece transfer robot further comprising;

an output shaft fixed to a base end of the first arm side or a base end of the second arm side, and having a vertical direction being a direction of the central axis line;
an output gear rotating around the central axis line together with the output shaft; a fixed gear disposed in an internal space of a lifting mechanism or a front end of the first arm side and provided with a tooth surface facing a tooth surface of the output gear;
a substantially cylindrical rotor rotatably attached to the output shaft independently around the central axis line;
a bearing provided on an inner wall of the rotor with an inclined central axis line inclined at a predetermined angle with respect to the central axis line, as a center of rotation;
an oscillating gear supported by the bearing and positioned between the tooth surfaces of the output gear and the fixed gear, having a first tooth surface provided on a surface on the fixed gear side meshed with the fixed gear and a second tooth surface provided on a surface on the output gear side meshed with the output gear, and rotating around the inclined central axis line;
a permanent magnet fixed coaxially around the central axis line of the outer circumference of the rotor as a center; and
an electromagnet provided in the internal space at the tip end of the first arm side or the lifting mechanism, and generating a rotating magnetic field with respect to the permanent magnet.

In order to solve the above problem, another aspect of the workpiece transfer robot of the present invention is;

a workpiece transfer robot having a joint in which a first arm and a second arm, or the second arm and a finger, and a lifting mechanism for lifting and moving the first arm are rotatable about a central axis line, the workpiece transfer robot further comprising;
an output shaft fixed to the lifting mechanism or a front end of the first arm side and having a vertical direction being a direction of the central axis line;
an output gear rotating about the central axis line together with the output shaft;
a fixed gear disposed in an internal space of a base end of the first arm side or in an internal space of a base end of the second arm side and provided with a tooth surface facing a tooth surface of the output gear;
a substantially cylindrical rotor rotatably attached to the output shaft independently around the central axis line;
a bearing provided on an inner wall of the rotor, with an inclined central axis line inclined at a predetermined angle with respect to the central axis line as a center of rotation;

an oscillating gear supported by the bearing, positioned between the tooth surfaces of the output gear and the fixed gear, having a first tooth surface provided on a surface on the fixed gear side meshed with the fixed gear and a second tooth surface provided on a surface on the output gear side meshed with the output gear, and rotating around the inclined central axis line as a center of rotation;
a permanent magnet fixed coaxially around the central axis line of an outer circumference of the rotor as a center; and
an electromagnet provided in an internal space of the base end of the first arm side or in an internal space of the base end of the second arm side and generating a rotating magnetic field with respect to the permanent magnet.

According to the above configuration, a fixed gear, an oscillating gear and an output gear are arranged around the outer circumference of the output shaft, and further, a permanent magnet is arranged horizontally from the position where the oscillating gear is arranged and outside the oscillating gear centered on the central axis line, and an electromagnet is arranged horizontally from the position where this permanent magnet is arranged and outside the permanent magnet centered on the central axis line, so that the vertical dimension of a joint of a workpiece transfer robot can be suppressed.

Further, the workpiece transfer robot of the present invention can suppress the vertical dimension of an arm body in which a plurality of arms are connected and the fingers rotatable attached to the tip end of the arm body, and each arm can be further reduced in weight. Further, since the permanent magnet that drives the output shaft can arrange the electromagnet in the outer circumferential direction of the output shaft, the output shaft can be made a hollow cylindrical shape. According to this, it is possible to lay electrical wiring and piping necessary for arm operation through the internal space of the output shaft.

EFFECT OF INVENTION

According to the present invention, a large driving force can be obtained while suppressing the vertical dimension of the joint of the workpiece transfer robot.

BRIEF DESCRIPTION OF THE DRAWINGS

FIG. 1 is a view illustrating the prior art.

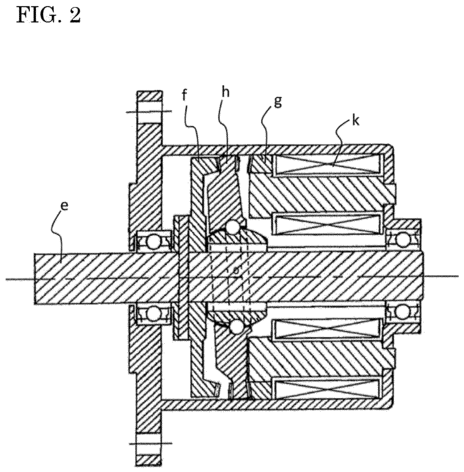

FIG. 2 is a view illustrating the prior art.
FIG. 3 is a view illustrating an embodiment of an actuator according to the present invention.
FIG. 4 is a view showing a magnetic force generated at a magnetic pole provided by an actuator according to the present invention.

FIG. 5 is a view illustrating another embodiment of an actuator according to the present invention.
FIG. 6 is a view showing a workpiece transfer robot of the present invention.
FIG. 7 is a view illustrating another workpiece transfer robot of the present invention.
FIG. 8 is a view illustrating another workpiece transfer robot of the present invention.
FIG. 9 is a view illustrating another workpiece transfer robot of the present invention.

MODE FOR CARRYING OUT THE INVENTION

Hereinafter, each embodiment of the present invention will be described with reference to the drawings. In the present specification, when a term "up and down" is used, upper and lower sides are defined along an axis direction of an output shaft, and do not mean up and down in a direction of gravity toward the center of the earth.

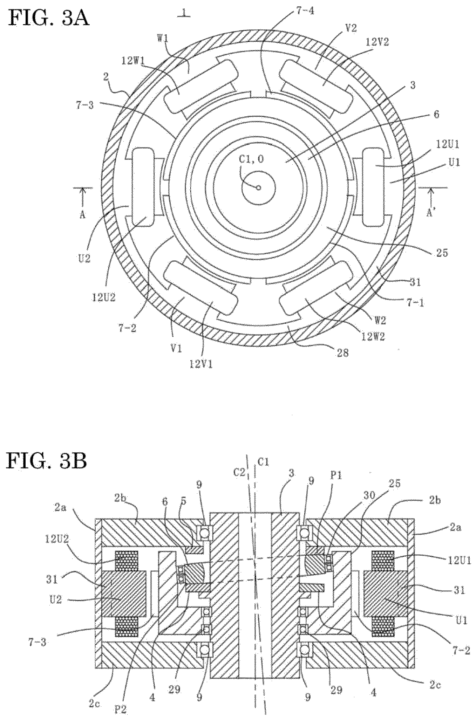

An actuator 1 will be described. FIG. 3A is a plan-sectional view of the actuator 1, and FIG. 3B is a cross-sectional view at cutting lines A-A' shown in FIG. 3A. An output shaft 3 of the present embodiment has a substantially cylindrical shape with a hollow inside, and is formed of a metal such as iron or aluminum.

A housing 2 is composed of a housing body 2a formed in a substantially cylindrical shape, a disc-shaped upper housing 2b covering the upper part of the housing body 2a, and a disc-shaped lower housing 2c covering the lower part of the housing body 2a. The upper and lower housings 2b and 2c have circular apertures in the middle, and the output shaft 3, which is rotatably supported in the housing 2 by bearings 9, is placed in these upper and lower apertures, with its upper and lower ends protruding from the housing 2. According to this, the output shaft 3 of the present embodiment can be rotated with respect to the housing 2 with an axis line C1 as a rotation center. Furthermore, the upper and lower parts of the housing 2 are communicated by the hollow portion of the output shaft 3.

The actuator 1 of the present embodiment includes a motor section that is a drive source that drives the output shaft 3 rotationally, and a speed reducer section that decelerates the speed of the driving force of a motor and transmits it to the output shaft 3. The actuator 1 has a rotor 25 that can rotate independently of the output shaft 3 by means of bearings 29, and an oscillating gear 6 is rotatably mounted through bearings 30 in the inner wall of the rotor 25. Further, permanent magnets 7-1 to 7-4 are mounted on the outer wall of the rotor 25, opposite an electromagnet 28 that make up a motor section.

(Speed reducer section)

The motor section of the present embodiment includes a substantially cylindrical rotor 25 rotatably attached to the output shaft 3 through the bearings 29 and the permanent magnets 7-1 to 7-4 fixed to the outer circumference of the rotor 25. The electromagnet 28 of the motor section has its magnetic poles U1, U2, V1, V2, W1, and W2 disposed in positions opposite to the permanent magnets 7-1 to 7-4. The output shaft 3 of this system is mounted on the housing 2 through the bearings 9, which is rotatable about the axis line C1, and the rotor 25 is mounted on the output shaft 3 through the bearings 29, which is rotatable about the axis line C1. The rotor 25 may be rotatably attached to the housing 2 instead of the output shaft 3 through bearings (not shown).

The rotor 25 is a member formed of a magnetic material such as iron, and on the outer circumferential wall surface of the rotor 25, the permanent magnets 7-1 to 7-4 having a curved surface corresponding to the outer circumferential wall surface of the rotor 25 are arranged at equal intervals at an angle of 90° with respect to the axis line C1. The permanent magnets 7-1 to 7-4 are arranged so that they have different polarities on the outside and inside, and each permanent magnet 7-1 to 7-4 adjacent to each other is arranged so that they have opposite polarities.

Further, the oscillating gear 6 is arranged in the inner space of the rotor 25. An oscillating gear 6 is arranged inclined so that it can rotate freely around an inclined central axis line C2, which is inclined at a predetermined angle with respect to the axis line C1, which is the center of rotation of the rotor 25. Specifically, an outer ring of each bearing 30 is provided on the inner wall of the rotor 25, and the center of rotation of each bearing 30 is set to be an inclined central axis line C2. The outer position of the oscillating gear 6 is then attached to the inner ring side of each bearing 30. Further, a fixed gear 5 is fixed to the housing 2 above the oscillating gear 6. The fixed gear 5 is provided with teeth formed to mesh with teeth formed on the upper surface of the oscillating gear 6. Further, an output gear 4 is fixed to an output shaft 3 below the oscillating gear 6. The output gear 4 is provided with teeth formed to mesh with the teeth formed on the lower surface of the oscillating gear 6. Further, the fixed gear 5 and the output gear 4 of the present embodiment are arranged coaxially so that their centers coincide with the axis line C1.

The oscillating gear 6 is arranged in a state of inclination at a predetermined angle with respect to the output gear 4 and the fixed gear 5, and as a drawing, a tooth around the highest point among the teeth of the oscillating gear 6 is meshed with a tooth formed in the fixed gear 5 at a first position P1, and among the plurality of teeth of the oscillating gear 6, a tooth around the lowest point is meshed with a tooth formed in the output gear 4 at a second position P2. A reduction ratio R of the fixed gear 5, the oscillating gear 6 and the output gear 4 is determined by the following formula.

$$R = 1 - (n1 \times n3) / (n2 \times n4)$$

Where n1: number of teeth on the first gear (fixed gear 5), n2: number of teeth on the second gear (the side of the oscillating gear 6 opposite the fixed gear 5), n3: number of teeth on the third gear (the side of the oscillating gear 6 opposite the output gear 4) and n4: number of teeth on the fourth gear (the teeth of the output gear 4).

Here, as the rotor 25 rotates clockwise around the axis line C1, the inclination direction of the oscillating gear 6 is also displaced clockwise. At this time, when the rotor 25 rotates once clockwise, the oscillating gear 6 and the fixed gear 5, and the oscillating gear 6 and the output gear 4 are in mesh with each other, so the oscillating gear 6 is displaced relative to the fixed gear 5 to a position where only one tooth remains than one rotation. Furthermore, as the rotor 25 continues to rotate, the oscillating gear 6 continues its displacement movement with respect to the fixed gear 5, and the output gear 4, which is meshed with the oscillating gear 6, rotates and moves with respect to the oscillating gear 6 at a predetermined reduction ratio.

(Motor Section 1)

Next, a motor section for operating the rotor 25 will be described. The rotor 25 is formed in a hollow shape, the oscillating gear 6 is disposed in the internal space, the permanent magnets 7-1 to 7-4 are disposed on the outer circumferential surface, and the magnetic poles U1, U2, V1, V2, W1, W1, and W2 of the electromagnet 28 are arranged at each position opposite the permanent magnets 7-1 to 7-4. The yoke of the electromagnet 28 is composed of a ring 31 formed in an annular shape centered on the axis line C1, and six magnetic poles U1, U2, V1, V2, W1, W2 formed so as to protrude from the inner wall of the ring 31 towards the axis line C1, and coils 12U1, 12U2, 12V1, 12V2, 12W1, 12W2 are respectively wound around the outer circumference of poles U1, U2, V1, V2, W1, W2.

(Rotating magnetic field 1)

The magnetic poles U1, U2, V1, V2, W1, and W2 are evenly and radially arranged at an angle of 60° about the axis line C1. Further, the coils 12U1, 12U2, 12V1, 12V2, 12W1, and 12W2 are wound so that the magnetic poles U1, U2, V1, V2, W1, and W2 located at opposing positions, that is, positions rotated 180° about the axis line C1, become the same magnetic pole when energized. By sequentially energizing each coil 12U1, 12U2, 12V1, 12V2, 12W1, 12W2, the magnetic field generated at each pole U1, U2, V1, V2, W1, W2 changes sequentially into a rotating magnetic field, causing the rotor 25 to rotate.

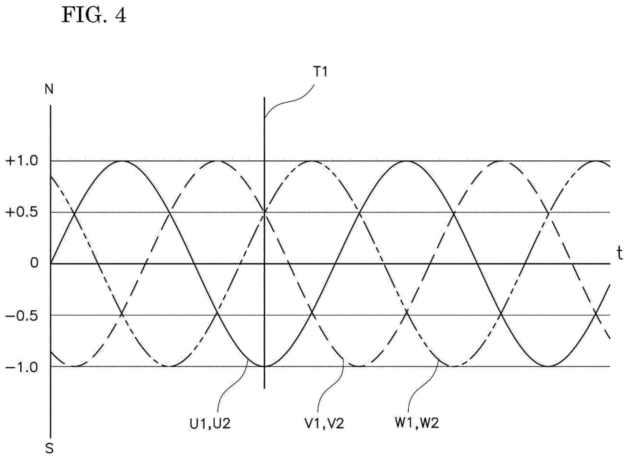

A three-phase sinusoidal drive current shown in FIG.4 is supplied to the magnetic poles U1-U2, V1-V2, and W1-W2 disposed at opposing positions. Here, the drive current is three-phase, and the magnetic pole U1 and the magnetic pole U2 are supplied with a current of the same phase, the magnetic pole V1 and the magnetic pole V2 are supplied with a current of the same phase, and the magnetic pole W1 and the magnetic pole W2 are supplied with a current of the same phase. The coil 12U1 and the coil 12U2, the coil 12V1 and the coil 12V2, and the coil 12W1 and the coil 12W2, which are arranged at positions opposite each other by 180°, are wound so that the magnetic field directions are the same when energized, and therefore the magnetic pole U1 and the magnetic pole U2, the magnetic pole V1 and the magnetic pole V2, and magnetic pole W1 and the magnetic pole W2 have the same polarity. According to this, the rotor 25 rotates clockwise as viewed in the drawing with the axis line C1 as the center of rotation due to the action of each of the magnetic poles U1-U2, V1-V2, and W1-W2 and the permanent magnets 7-1 to 7-4. When the rotor 25 rotates, the first position P1 where the fixed gear 5 and the oscillating gear 6 mesh with each other in conjunction with this rotation is displaced clockwise with respect to the circumferential direction. With this movement, the oscillating gear 6 rotates with respect to the fixed gear 5 by the difference in the number of teeth formed in each. The second position P2 where the oscillating gear 6 and the output gear 4 mesh with each other is also displaced clockwise in the circumferential direction. With this movement, the output gear 4 rotates with respect to the oscillating gear 6 by the difference in the number of teeth formed in each. As a result, when the output gear 4 rotates, the output shaft 3 on which the output gear 4 is fixed also rotates. That is, due to the rotation of the rotor 25, the output shaft 3 rotates with respect to the housing 2 along a reduction ratio attained by the fixed gear 5, the oscillating gear 6, and the output gear 4.

Besides, as a means for rotationally moving the rotor 25 of this embodiment, a mode in which a sinusoidal drive current is passed through each of the magnetic poles U1, U2, V1, V2, W1 and W2 has been described. However, this is not limited to this. For example, it is also possible to form teeth on the permanent magnets 7-1 to 7-4 and the magnetic poles U1, U2, V1, V2, W1, and W2 like a stepping motor, and rotate the rotor 25 by a pulse current. Furthermore, in order to detect the rotational position of the rotor 25, a known detector such as a hall sensor, encoder or resolver may be provided.

(Motor Section 2)

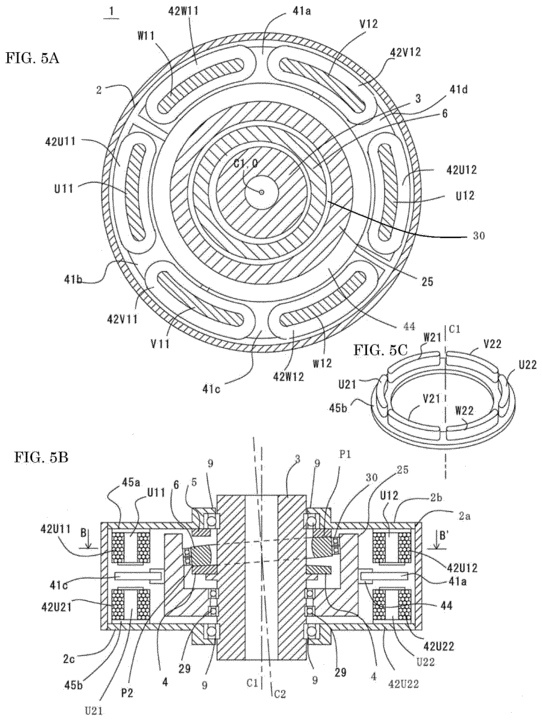

The motor section may be in the form of an axial gap type motor as shown in FIG.5. Fig. 5A shows a plan view of the actuator 1 and Fig. 5B shows a cross-sectional view at the cut line B-B'. FIG. 5C is a view illustrating a yoke. The axial gap type motor is a motor that has a magnetic gap in the direction of the rotation axis and the magnetic flux passes in the direction of the central axis line C1, which has the advantages of a thinner shape and higher output than the radial gap type motor. In the following description and in FIG. 5, components having the same functions as those in FIG. 3 are given the same reference numerals and descriptions thereof will be omitted. In this embodiment, an axial-gap motor with a double-stator structure is shown, but an axial-gap motor with a single-stator structure may also be used.

In FIGS. 5A, 5B, a support ring 44 is attached to the outer circumferential surface of the rotor 25. Four permanent magnets 41a, 41b, 41c, and 41d, each having a 90° arc shape, are attached to the support ring 44 so as to circle around the rotor 25. The upper side of the permanent magnets 41a, 41b, 41c, and 41d in the direction of the central axis line C1 is an N-pole, and the lower side is an S-pole (the magnetic polarity may be reversed).

The magnetic poles U11, U12, V11, W12, W11, W12, of the electromagnet 43a are arranged above the central axis line C1 direction of the permanent magnets 41a, 41b, 41c and 41d, and magnetic poles U21, U22, V21, V22, W21, W22 of the electromagnet 43b are arranged below the central axis line C1 direction of the permanent magnets 41a, 41b, 41c and 41d to form a magnetic gap on both sides of the upper N-pole and the lower S-pole.

FIGS. 5A and 5B show the yoke 45b of the electromagnet 43b among the yokes 45a and 45b of the electromagnets 43a and 43b. Since the yoke 45a of the electromagnet 43a is the same as the yoke 45b of the electromagnet 43b, the explanation is omitted. As shown in FIG. 5C, the yoke 45b of the electromagnet 43b includes a ring formed in an annular shape centered on the central axis line C1, and six magnetic poles U21, U22, V21, V22, W21, W21, W22 so as to protrude from the upper surface of the ring in the central axis line C1 direction. The magnetic poles U21, U22, V21, V22, W21, W22 are wound with the coils 42U21, 42U22, 42V21, 42V22, 42W21, and 42W22 of the electromagnet 28.

(Rotating magnetic field 2)

The magnetic poles U21, U22, V21, V22, W21, W22 (and the magnetic poles U11, U12, V11, W12, W11, W12 on the electromagnet 43a side, which are not shown in the view, and explanations of which are similarly omitted, hereafter) are arranged evenly and radially at a 60° angle around the central axis line C1. In addition, the coils 42U21, 42U22, 42V21, 42V22, 42W21, 42W22 (and the coils 42U11, 42U12, 42V11, 42V12, 42W11, 42W12 on the electromagnet 43a side, which are not shown, explanations of which are similarly omitted, hereafter) are wound so that magnetic poles U21, U22, V21, V22, W21, W22, which are located at opposing positions, that is, positions rotated 180° around the central axis line C1, become opposite magnetic poles when energized. By sequentially energizing each coil 42U21, 42U22, 42V21, 42V22, 42W21 and 42W22, the magnetic field generated at each pole U21, U22, V21, V22, W21 and W22 changes sequentially into a rotating magnetic field, causing the rotor 25 to rotate.

When the rotor 25 rotates, the first position P1 where the fixed gear 5 and the oscillating gear 6 mesh with each other in conjunction with this rotation is displaced clockwise with respect to the circumferential direction. With this movement, the oscillating gear 6 rotates with respect to the fixed gear 5 by the difference in the number of teeth formed in each. The second position P2 where the oscillating gear 6 and the output gear 4 mesh with each other is also displaced clockwise in the circumferential direction. With this movement, the output gear 4 rotates with respect to the oscillating gear 6 by the difference in the number of teeth formed in each. As a result, when the output gear 4 rotates, the output shaft 3 on which the output gear 4 is fixed also rotates. That is, due to the rotation of the rotor 25, the output shaft 3 rotates with respect to the housing 2 along a reduction ratio attained by the fixed gear 5, the oscillating gear 6, and the output gear 4.

(Workpiece transfer robot)

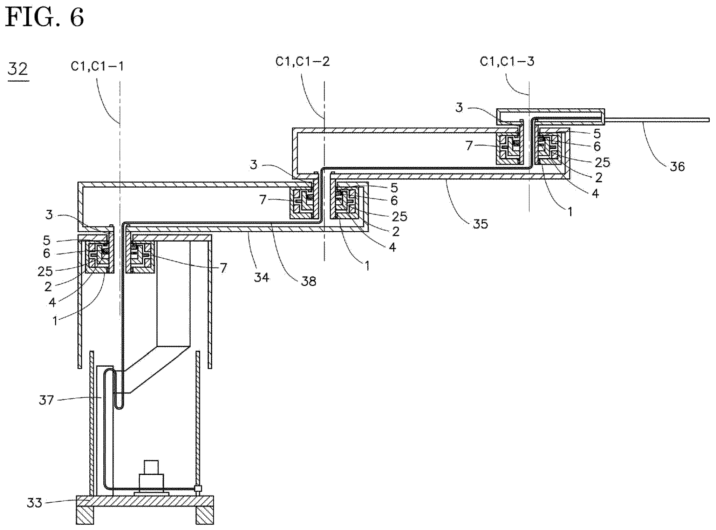

Next, a description will be given of a mode in which the housing 2 and output shaft 3 of actuator 1 are mounted to the joints that move a base, a first arm, a second arm and a finger of a horizontal articulated robot. Embodiments of workpiece transfer robots 32, 32', 32", and 32‴ using the actuator 1 will be described using FIGS. 6, 7, 8, and 9, respectively. These workpiece transfer robots are horizontally articulated robots.

FIG. 6 is a cross-sectional view of the workpiece transfer robot 32. A base 33, a first arm 34, a second arm 35, a finger 36, and a lifting mechanism 37 are included. The lifting mechanism 37 is provided on the base 33 and lifts and moves the first arm 34 by a known drive means. The first arm 34 has a base end rotatably attached to the lifting mechanism 37 through an unshown bearing, and a base end of the second arm 35 is rotatably attached to a front end of the first arm 34 through an unshown bearing. At a front end of the second arm 35, a base end of the finger 36, which holds a workpiece, is rotatably mounted through an unshown bearing. Here, the first arm 34 is configured to be rotatable in a horizontal plane with the axis line C1-1 as a rotation center, the second arm 35 is configured to be rotatable in a horizontal plane with the axis line C1-2 as a rotation center, and the finger 36 is rotatable in a horizontal plane with the axis line C1-3 as a rotation center.

The workpiece transfer robot 32 of the present embodiment includes several actuators 1 as a drive source that individually rotates and moves the first arm 34, the second arm 35, and the finger 36 in the horizontal direction. In the actuator 1 that drives the first arm 34, the housing 2 is fixed to the lifting mechanism 37 and the base end of the first arm 34 is fixed to the output shaft 3. The first arm 34 is arranged so that the axis line C1 of the actuator 1 and a rotation axis line C1-1 of the first arm 34 coincide. The actuator 1 driving the second arm 35 is disposed in the internal space of the front end of the first arm 34, the housing 2 is fixed to the first arm 34, and the base end of the second arm 35 is fixed to the output shaft 3. Further, the second arm 35 is arranged so that the axis line C1 of the actuator 1 and a rotation axis line C1-2 of the second arm 35 coincide. Further, the actuator 1 driving the finger 36 is disposed in the internal space of the front end of the second arm 35, the housing 2 is fixed to the second arm 35, and the base end of the finger 36 is fixed to the output shaft 3. Further, the finger 36 is arranged so that the axis line C1 of the actuator 1 and a rotation axis line C1-3 of the finger 36 coincide.

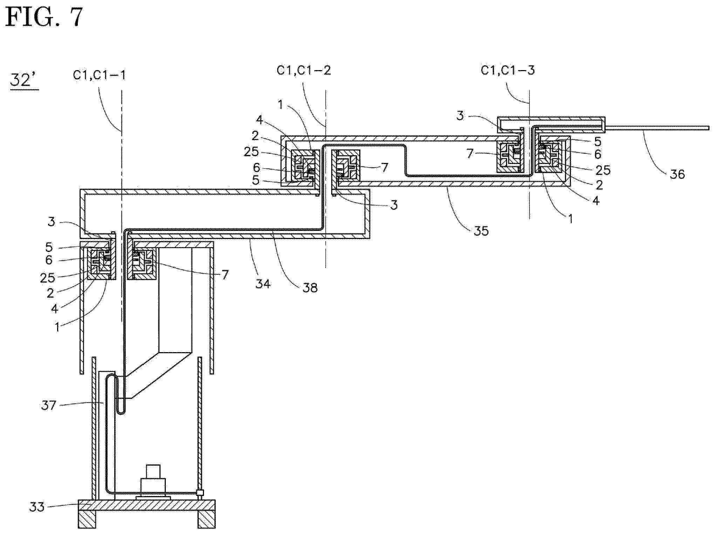

In FIG. 7, the workpiece transfer robot 32' has an actuator 1 that drives the second arm 35, the output shaft 3 is fixed to the front end of the first arm 34, and the housing 2 is placed in the internal space of the base end of the second arm 35. Further, the second arm 35 is arranged so that the axis line C1 of the actuator 1 and the rotation axis line C1-2 of the second arm 35 coincide. The other configuration is the same as that of the workpiece transfer robot 32.

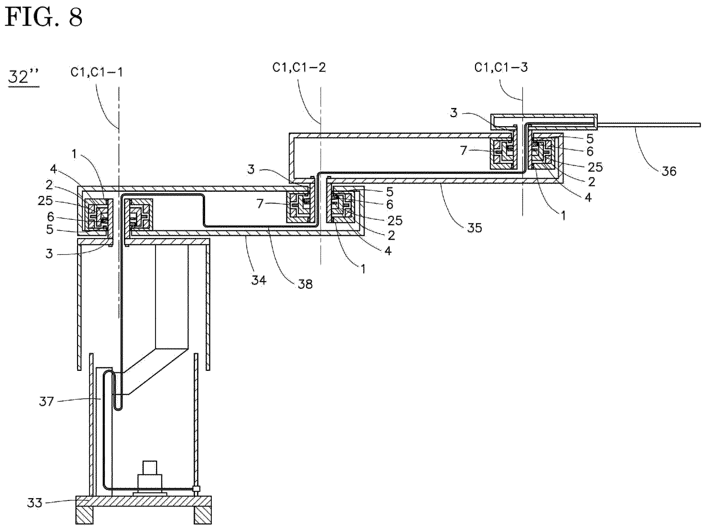

In FIG. 8, the workpiece transfer robot 32" is an actuator 1 that drives the first arm 34, the output shaft 3 is fixed to the lifting mechanism 37, and the housing 2 is fixed to the internal space of the base end of the first arm 34. Further, the first arm 34 is arranged so that the axis line C1 of the actuator 1 and the rotation axis line C1-1 of the first arm 34 coincide. The other configuration is the same as that of the workpiece transfer robot 32.

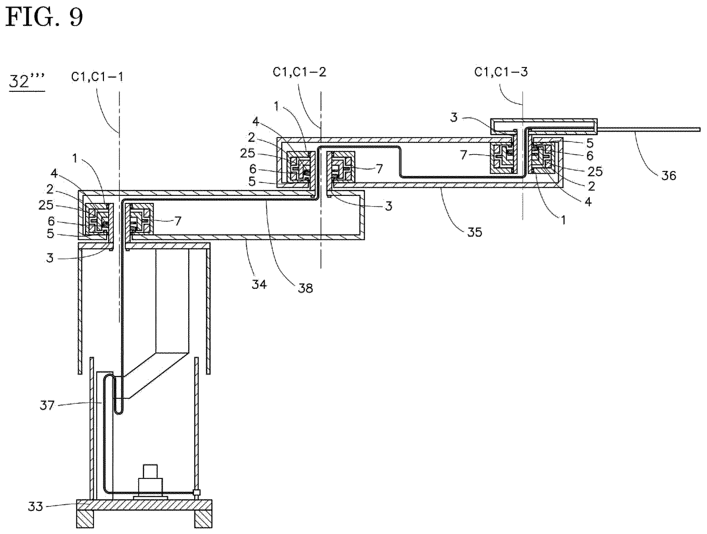

In FIG. 9, the workpiece transfer robot 32‴ is an actuator 1 that drives the first arm 34, the output shaft 3 is fixed to the lifting mechanism 37, and the housing 2 is fixed to the internal space of the base end of the first arm 34. Further, the first arm 34 is arranged so that the axis line C1 of the actuator 1 and the rotation axis line C1-1 of the first arm 34 coincide. Furthermore, in the actuator 1 that drives the second arm 35, the output shaft 3 is fixed to the front end of the first arm 34, and the housing 2 is disposed in the internal space at the base end of the second arm 35. Further, the second arm 35 is arranged so that the axis line C1 of the actuator 1 and the rotation axis line C1-2 of the second arm 35 coincide. The other configuration is the same as that of the workpiece transfer robot 32.

Each actuator 1 provided in the first arm 34, the second arm 35, and the finger 36 is individually controlled by a control unit (not shown). Known hall sensors, encoders, resolvers and detection sensors are provided as detection means to detect the rotational positions of the first arm 34, second arm 35 and the finger 36. The rotational positions and speeds of the first arm 34, the second arm 35, and the finger 36 are individually controlled by the control unit, and the workpiece held on the finger 36 can be conveyed to a predetermined position.

By using the actuator 1 as a drive source for moving the joints of the workpiece transfer robots 32, 32', 32", 32‴, the weight of the joint parts of each arm 34, 35 can be significantly reduced compared to those using known motors and speed reducers. In the above example, the actuator 1 is provided for each joint, but the actuator 1 may be provided for one or two joints. The actuator 1 according to the present invention has a smaller thickness dimension than known motors and speed reducers by arranging the speed reducer section and motor section in the radial direction, and therefore the vertical dimension of each arm 34, 35 can be reduced. Furthermore, by positioning the output shaft 3, which serves as a driving shaft, at the center and arranging the speed reducer section and motor section radially, it is possible to form the output shaft 3 into a hollow shape, making it possible to easily pass components such as electrical wiring 38 and piping required for the operation of each arm 34, 35, and finger 36 through it. Furthermore, since a large reduction ratio can be obtained despite the relatively small external dimensions, the positioning accuracy of each arm 34, 35 and finger 36 is improved, and as a result, the transport accuracy of the workpiece transfer robot 32, 32', 32", 32''' is improved.

In the above embodiment, the current waveform supplied to the motor section is a sine wave, but the present invention is not limited thereto, and for example, it is possible to supply an electric current as a trapezoidal waveform, or the motor section may be driven by microstep. In the above embodiment, 3-phase excitation is used, but another excitation such as 2-phase, 4-phase, and 5-phase may be used. Although the workpiece transfer robot of the present invention has been described above, the present invention is not limited to the above embodiment, and various modifications are possible without changing the gist of the present invention.

DESCRIPTION OF THE REFERENCE NUMERAL

    1 actuator
    2 housing
    2a housing body
    2b upper housing
    2c lower housing
    3 output shaft
    4 output gear
    5 fixed gear
    6 oscillating gear
    7 permanent magnet
    12U1, 12U2, 12V1, 12V2, 12W1, 12W2 coil
    25 rotor
    28 electromagnet
    31 ring
    32, 32', 32", 32''' workpiece transfer robot
    33 base unit
    34 first arm
    34, 35 arm
    35 second arm
    36 finger
    37 lifting mechanism
    38 electrical wiring
    41a, 41b permanent magnet

    42U1, 42U2, 42V1, 42V2, 42W1, 42W2 coil
    43 electromagnet
    44 support ring
    45a, 45b yoke
    C1 rotation axis line
    C2 inclined central axis line
    P1 first position
    P2 second position
    R reduction ratio
    U1, U2, V1, V2, W1, W2 magnetic pole
    U11, U12, V11, V12, W11, W12, U21, U22, V21, V22, W21, W22 magnetic pole

**Claims**

1.  A workpiece transfer robot having a joint in which a first arm and a second arm, or the second arm and a finger, and a lifting mechanism for lifting and moving the first arm are rotatable about a central axis line, the workpiece transfer robot further comprising;

    an output shaft fixed to a base end of the finger side and having a vertical direction in a direction of the central axis line;
    an output gear rotating about the central axis line together with the output shaft;
    a fixed gear disposed in an internal space of a front end of the second arm side and provided with a tooth surface facing a tooth surface of the output gear;
    a substantially cylindrical rotor rotatably attached to the output shaft independently around the central axis line;
    a bearing provided on an inner wall of the rotor, with an inclined central axis line inclined at a predetermined angle with respect to the central axis line as a center of rotation;
    an oscillating gear supported by the bearing, positioned between the tooth surfaces of the output gear and the fixed gear, having a first tooth surface provided on a surface on the fixed gear side meshed with the fixed gear and a second tooth surface provided on a surface on the output gear side meshed with the output gear, and rotating around the inclined central axis line;
    a permanent magnet fixed coaxially around the central axis line of an outer circumference of the rotor as a center; and
    an electromagnet provided in an internal space of a front end of the second arm side and generating a rotating magnetic field with respect to the permanent magnet,

2.  A workpiece transfer robot having a joint in which a first arm and a second arm, or the second arm and a finger, and a lifting mechanism for lifting and moving the first arm are rotatable about a central axis line, the workpiece transfer robot further comprising;

an output shaft fixed to a base end of the first arm side or a base end of the second arm side, having a vertical direction being a direction of the central axis line;

an output gear rotates around the central axis line together with the output shaft;

a fixed gear disposed in an internal space of the lifting mechanism or a front end of the first arm side and provided with a tooth surface facing a tooth surface of the output gear;

a substantially cylindrical rotor rotatably attached to the output shaft independently around the central axis line;

a bearing provided on an inner wall of the rotor with an inclined central axis line inclined at a predetermined angle with respect to the central axis line, as a center of rotation;

an oscillating gear supported by the bearing and positioned between the tooth surfaces of the output gear and the fixed gear, having a first tooth surface provided on a surface on the fixed gear side meshed with the fixed gear and a second tooth surface provided on a surface on the output gear side meshed with the output gear, and rotating around the inclined central axis line;

a permanent magnet fixed coaxially around the central axis line of an outer circumference of the rotor as a center; and

an electromagnet in an internal space at the front end of the first arm side or the lifting mechanism, and generating a rotating magnetic field with respect to the permanent magnet.

3. A workpiece transfer robot having a joint in which the first arm and the second arm, or the second arm and the finger, and the lifting mechanism for lifting and moving the first arm are rotatable about a central axis line, the workpiece transfer robot further comprising;

an output shaft fixed to a front end of the first arm side or the lifting mechanism, and having a vertical direction in a direction of the central axis line;

an output gear rotating about the central axis line together with the output shaft;

a fixed gear disposed in an internal space of a base end of the first arm side or an internal space of a base end of the second arm side and provided with a tooth surface facing a tooth surface of the output gear;

a substantially cylindrical rotor rotatably attached to the output shaft independently around the central axis line;

a bearing provided on an inner wall of the rotor

with an inclined central axis line inclined at a predetermined angle with respect to the central axis line, as a center of rotation;

an oscillating gear supported by the bearing and positioned between the tooth surfaces of the output gear and the fixed gear, having a first tooth surface provided on a surface on the fixed gear side meshed with the fixed gear and a second tooth surface provided on a surface on the output gear side meshed with the output gear, and rotating around the inclined central axis line;

a permanent magnet fixed coaxially around the central axis line of an outer circumference of the rotor; and

an electromagnet provided in an internal space of the base end of the first arm side or an internal space of the base end of the second arm side and generating a rotating magnetic field with respect to the permanent magnet.

4. The workpiece transfer robot of one of claims 1 to 4, wherein the output shaft has an internal space penetrating in the vertical direction, through which the piping necessary for an operation of the finger penetrates.

5. The workpiece transfer robot of one of claims 1 to 4, wherein the permanent magnet has different poles in the direction of the central axis line and the electromagnet forms a magnetic gap on both sides opposite the permanent magnet in the direction of the central axis line.

FIG. 1

FIG. 2

FIG. 3A

FIG. 3B

FIG. 4

EP 4 596 186 A1

EP 4 596 186 A1

FIG. 5A

FIG. 5C

FIG. 5B

14

FIG. 6

EP 4 596 186 A1

FIG. 7

# FIG. 8

FIG. 9

## INTERNATIONAL SEARCH REPORT

| International application No. |
| --- |
| **PCT/JP2023/030437** |

| A. | CLASSIFICATION OF SUBJECT MATTER |
| --- | --- |

***B25J 17/00***(2006.01)i; ***F16H 1/32***(2006.01)i; ***H02K 7/116***(2006.01)i
FI:   B25J17/00 E; F16H1/32 C; H02K7/116

According to International Patent Classification (IPC) or to both national classification and IPC

| B. | FIELDS SEARCHED |
| --- | --- |

Minimum documentation searched (classification system followed by classification symbols)

B25J1/00-21/02; F16H1/32; H02K7/116

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2015-142454 A (CANON INC.) 03 August 2015 (2015-08-03)<br>paragraphs [0019]-[0029], [0047]-[0060], fig. 2(a) | 1-5 |
| Y | JP 2010-13078 A (JTEKT CORP.) 21 January 2010 (2010-01-21)<br>paragraphs [0019]-[0020], [0039]-[0043], [0070]-[0071], fig. 2-3, 6 | 1-5 |
| Y | JP 2012-161858 A (DAIHEN CORP.) 30 August 2012 (2012-08-30)<br>paragraphs [0025]-[0042], fig. 2 | 1-5 |
| Y | JP 2007-131295 A (NTN CORP.) 31 May 2007 (2007-05-31)<br>paragraph [0021], fig. 1 | 5 |
| Y | JP 2007-237927 A (NTN CORP.) 20 September 2007 (2007-09-20)<br>paragraphs [0035]-[0036], fig. 6 | 5 |

☐ Further documents are listed in the continuation of Box C.          ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **13 October 2023** | **31 October 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/030437**

| Patent document cited in search report | | | Publication date (day/month/year) | Patent family member(s) | Publication date (day/month/year) |
|---|---|---|---|---|---|
| JP | 2015-142454 | A | 03 August 2015 | US 2015/0209966 A1 paragraphs [0027]-[0037], [0055]-[0069], fig. 2A CN 104802182 A | |
| JP | 2010-13078 | A | 21 January 2010 | US 2011/0108355 A1 paragraphs [0058]-[0060], [0095]-[0105], [0149]-[0152], fig. 2-3, 6 WO 2010/004726 A1 EP 2298624 A1 | |
| JP | 2012-161858 | A | 30 August 2012 | US 2012/0201641 A1 paragraphs [0032]-[0049], fig. 2 | |
| JP | 2007-131295 | A | 31 May 2007 | (Family: none) | |
| JP | 2007-237927 | A | 20 September 2007 | (Family: none) | |

Form PCT/ISA/210 (patent family annex) (January 2015)

**REFERENCES CITED IN THE DESCRIPTION**

**Patent documents cited in the description**

- JP 2012161858 A
- JP 6005981 B
- JP 2020043620 A